# EUROPEAN PATENT APPLICATION

(11) **EP 2 961 110 A1**
(43) Date of publication of application: **30.12.2015**
(21) Application number: 14870658.3
(22) Date of filing: 19.03.2014
(51) Int. Cl.: H04L 12/66, H04L 29/06

(54) **PACKET TRANSMISSION METHOD AND APPARATUS, AND SERVER**

(71) Applicant: Huawei Device Co., Ltd., Shenzhen, Guangdong 518129 (CN)
(72) Inventor: MIAO, Jian, Shenzhen Guangdong 518129 (CN); ZHAO, Xuewen, Shenzhen Guangdong 518129 (CN)
(74) Representative: Körber, Martin Hans
(86) International application number: PCT/CN2014/073715
(87) International publication number: WO 2015/139244

(57) **Abstract**

The present invention discloses a packet transmission method and apparatus, and a server, and belongs to the field of Internet technologies. The method includes: receiving at least one first IPv4 packet sent by at least one user equipment, where each first IPv4 packet carries an IPv4 address and a source port that are allocated to each user equipment; determining, according to a correspondence between a source port of an IPv4 packet and an output port of an IPv6 packet, an output port corresponding to the source port of each first IPv4 packet; updating the source port of each first IPv4 packet with the corresponding output port; converting, according to a set algorithm, the IPv4 address carried in each first IPv4 packet into a same target global unicast IPv6 address, to obtain a first IPv6 packet corresponding to each first IPv4 packet; and transmitting, to an IPv6 network, each first IPv6 packet by using the output port of each first IPv6 packet. According to the present invention, IPv4 addresses carried in received first IPv4 packets are converted into a same target IPv6 address, thereby reducing resource consumption during packet transmission, and improving packet transmission efficiency.

## Description

### TECHNICAL FIELD

The present invention relates to the field of Internet technologies, and in particular, to a packet transmission method and apparatus, and a server.

### BACKGROUND

With the development of Internet technologies, IPv4 (Internet Protocol Version 4, Internet Protocol version 4) address resources are gradually exhausted while an IPv6 (Internet Protocol Version4, Internet Protocol version 6) technology gradually becomes mature. Currently, an operator provides a pure IPv6 access service for an access gateway device (for example, a home router) due to a lack of public IPv4 address resources; however, a user equipment (such as a personal computer or a smartphone) connected to the access gateway device needs to access an IPv4 site on the Internet. Therefore, packet transmission needs to be performed to implement IPv4 end-to-end communication that traverses a pure IPv6 network.

According to a related technology, during packet transmission, first, one 32-bit IPv4 address is allocated to each user equipment according to DHCP (Dynamic Host Configuration Protocol, Dynamic Host Configuration Protocol); further, IPv4 packets that carries the IPv4 addresses and sent by the user equipments are received; then, a global unicast IPv6 prefix is acquired from an IPv6 network side; and the IPv4 addresses are converted into different 128-bit IPv6 addresses according to the acquired global unicast IPv6 prefix, the IPv6 addresses obtained after the conversion are carried in IPv6 packets, and the IPv6 packets are sent to an IPv6 network. IPv6 packets returned by the IPv6 network are received; and the received IPv6 packets are converted into IPv4 packets, and the IPv4 packets are sent to the user equipment. Specifically, when the IPv4 addresses that are carried in the received IPv4 packets sent by the user equipments are converted into the IPv6 addresses, if a length of the global unicast IPv6 prefix is 96 bits, the 96-bit global unicast IPv6 prefix may be directly added before the 32-bit IPv4 address; and if the length of the global unicast IPv6 prefix is not 96 bits, the 32-bit IPv4 address may be converted into the 128-bit IPv6 address by means of operations such as u byte padding, suffix padding, and IPv4 address splitting and padding.

During implementation of the present invention, the inventor finds that the related technology has at least the following problems:

According to the related technology, during packet transmission, because different user equipments have different IPv4 addresses, when conversion is performed on the addresses, conversion needs to be independently performed on each IPv4 address, and calculation for independently performing conversion on each IPv4 address is relatively complex; in addition, because operations such as u byte padding, suffix padding, and IPv4 address splitting and padding need to be performed when the length of the global unicast IPv6 prefix is not 96 bits, and these operations involve a relatively large amount of calculation, consumption during the packet transmission increases, thereby leading to low packet transmission efficiency.

### SUMMARY

In order to resolve problems of related technologies, embodiments of the present invention provide a packet transmission method and apparatus, and a server. The technical solutions are as follows:

According to a first aspect, a packet transmission method is provided, where the method includes:
receiving at least one first IPv4 packet sent by at least one user equipment, where each of the first IPv4 packet carries an IPv4 address and a source port that are allocated to each user equipment;
determining, according to a correspondence between a source port of an IPv4 packet and an output port of an IPv6 packet, an output port corresponding to the source port of each of the first IPv4 packet;
updating the source port corresponding to each of the first IPv4 packet with the corresponding output port, and converting, according to a set algorithm, the IPv4 address carried in each of the first IPv4 packet into a same target global unicast IPv6 address, to obtain a first IPv6 packet corresponding to each of the first IPv4 packet, where each of the first IPv6 packet carries the IPv6 address obtained after the conversion and the output port corresponding to the source port; and
transmitting, to an IPv6 network, each of the first IPv6 packet by using the output port of each of the first IPv6 packet.

With reference to the first aspect, in a first possible implementation manner of the first aspect, before the receiving a first IPv4 packet sent by at least one user equipment, the method further includes:
starting a Dynamic Host Configuration Protocol DHCP service; and
allocating an IPv4 address to an accessed user equipment by using the DHCP service.

With reference to the first aspect, in a second possible implementation manner of the first aspect, before the converting the IPv4 address carried in each of the first IPv4 packet into a same target global unicast IPv6 address, the method further includes:
acquiring an IPv6 prefix of the global unicast IPv6 address from an IPv6 network server; and
padding a user-defined suffix following the acquired IPv6 prefix of the global unicast IPv6 address, to obtain the target global unicast IPv6 address.

With reference to the first aspect, in a third possible implementation manner of the first aspect, after the transmitting, to an IPv6 network, each of the first IPv6 packet by using the output port of each of the IPv6 packet, the method further includes:
receiving a second IPv6 packet sent by the IPv6 network, where the second IPv6 packet carries the target global unicast IPv6 address and an output port;
determining, according to the correspondence between a source port of an IPv4 packet and an output port, a source port corresponding to the output port of the second IPv6 packet; and updating the output port of the second IPv6 packet with the corresponding source port, and updating the IPv6 address carried in the second IPv6 packet with a corresponding IPv4 address, to obtain a second IPv4 packet corresponding to the second IPv6 packet; and
sending, by using the source port corresponding to the second IPv4 packet, the second IPv4 packet to a user equipment corresponding to the IPv4 address obtained after the update.

With reference to the first aspect, in a fourth possible implementation manner of the first aspect, the determining an output port corresponding to the source port of each of the first IPv4 packet includes:
determining, according to the correspondence between a source port of an IPv4 packet and an output port of an IPv6 packet, the output port corresponding to the source port of each of the first IPv4 packet; or
randomly allocating a corresponding output port according to the source port of each of the first IPv4 packet, to obtain the output port corresponding to the source port of each of the first IPv4 packet.

According to a second aspect, a packet transmission apparatus is provided, where the apparatus includes:
a first receiving module, configured to control a receiver to receive at least one first IPv4 packet sent by at least one user equipment, where each of the first IPv4 packet carries an IPv4 address and a source port that are allocated to each user equipment;
a first determining module, configured to control a processor to determine, according to a correspondence between a source port of an IPv4 packet and an output port of an IPv6 packet, an output port corresponding to the source port of each of the first IPv4 packet;
a first updating module, configured to control the processor to update the source port corresponding to each of the first IPv4 packet with the corresponding output port;
a conversion module, configured to control the processor to convert, according to a set algorithm, the IPv4 address carried in each of the first IPv4 packet into a same target global unicast IPv6 address, to obtain a first IPv6 packet corresponding to each of the first IPv4 packet, where each of the first IPv6 packet carries the IPv6 address obtained after the conversion and the output port corresponding to the source port; and
a first sending module, configured to control a transmitter to transmit, to an IPv6 network, each of the first IPv6 packet by using the output port corresponding to each of the first IPv6 packet.

With reference to the second aspect, in a first possible implementation manner of the second aspect, the apparatus further includes:
a starting module, configured to control the processor to start a Dynamic Host Configuration Protocol DHCP service; and
an allocation module, configured to control the processor to allocate an IPv4 address to an accessed user equipment by using the DHCP service.

With reference to the second aspect, in a second possible implementation manner of the second aspect, the apparatus further includes:
an acquiring module, configured to control the processor to acquire an IPv6 prefix of the global unicast IPv6 address from an IPv6 network server; and
a padding module, configured to control the processor to pad a user-defined suffix following the acquired IPv6 prefix of the global unicast IPv6 address, to obtain the target global unicast IPv6 address.

With reference to the second aspect, in a third possible implementation manner of the second aspect, the apparatus further includes:
a second receiving module, configured to control the receiver to receive a second IPv6 packet sent by the IPv6 network, where the second IPv6 packet carries the target global unicast IPv6 address and an output port;
a second determining module, configured to control the processor to determine, according to the correspondence between a source port of an IPv4 packet and an output port of an IPv6 packet, a source port corresponding to the output port of the second IPv6 packet;
a second updating module, configured to control the processor to update the output port of the second IPv6 packet with the corresponding source port, and update the IPv6 address carried in the second IPv6 packet with a corresponding IPv4 address, to obtain a second IPv4 packet corresponding to the second IPv6 packet; and
a second sending module, configured to control the transmitter to send, by using the source port of the second IPv4 packet, the second IPv4 packet to a user equipment corresponding to the IPv4 address obtained after the update.

With reference to the second aspect, in a fourth possible implementation manner of the second aspect, the first determining module is configured to control the processor to determine, according to the correspondence between a source port of an IPv4 packet and an output port of an IPv6 packet, the output port corresponding to the source port of each of the first IPv4 packet; or randomly allocate a corresponding output port according to the source port of each of the first IPv4 packet, to obtain the output port corresponding to the source port of each of the first IPv4 packet.

According to a third aspect, a packet transmission server is provided, where the server includes: a processor, a transmitter, and a receiver, where:
the receiver is configured to receive at least one first IPv4 packet sent by at least one user equipment, where each of the first IPv4 packet carries an IPv4 address and a source port that are allocated to each user equipment;
the processor is configured to: determine, according to a correspondence between a source port of an IPv4 packet and an output port of an IPv6 packet, an output port corresponding to the source port of each of the first IPv4 packet; update the source port corresponding to each of the first IPv4 packet with the corresponding output port; and convert, according to a set algorithm, the IPv4 address carried in each of the first IPv4 packet into a same target global unicast IPv6 address, to obtain a first IPv6 packet corresponding to each of the first IPv4 packet, where each of the first IPv6 packet carries the IPv6 address obtained after the conversion and the output port corresponding to the source port; and
the transmitter is configured to transmit, to an IPv6 network, each of the first IPv6 packet by using the output port of each of the first IPv6 packet.

With reference to the third aspect, in a first possible implementation manner of the third aspect, the processor is further configured to: start a Dynamic Host Configuration Protocol DHCP service; and allocate an IPv4 address to an accessed user equipment by using the DHCP service.

With reference to the third aspect, in a second possible implementation manner of the third aspect, the processor is further configured to acquire an IPv6 prefix of the global unicast IPv6 address from an IPv6 network server; and pad a user-defined suffix following the acquired IPv6 prefix of the global unicast IPv6 address, to obtain the target global unicast IPv6 address.

With reference to the third aspect, in a third possible implementation manner of the third aspect, the receiver is further configured to receive a second IPv6 packet sent by the IPv6 network, where the second IPv6 packet carries the target global unicast IPv6 address and an output port;
the transmitter is further configured to send, by using the source port of the second IPv4 packet, the second IPv4 packet to a user equipment corresponding to the IPv4 address obtained after the update; and
the processor is further configured to: determine, according to the correspondence between a source port of an IPv4 packet and an output port of an IPv6 packet, a source port corresponding to the output port of the second IPv6 packet; and update the output port of the second IPv6 packet with the corresponding source port, and update the IPv6 address carried in the second IPv6 packet with a corresponding IPv4 address, to obtain a second IPv4 packet corresponding to the second IPv6 packet.

With reference to the third aspect, in a fourth possible implementation manner of the third aspect, the processor is configured to: determine, according to the correspondence between a source port of an IPv4 packet and an output port of an IPv6 packet, the output port corresponding to the source port of each of the first IPv4 packet; or randomly allocate a corresponding output port according to the source port of each of the first IPv4 packet, to obtain the output port corresponding to the source port of each first IPv4 packet.

The technical solutions provided by the embodiments of the present invention bring about the following beneficial effects:

A first IPv4 packet that is sent by a user equipment and carries an IPv4 address and a source port that are allocated to each user equipment is received; an output port corresponding to the source port of each first IPv4 packet is determined; further, the source port corresponding to each first IPv4 packet is updated with the corresponding output port; the IPv4 address carried in each first IPv4 packet is converted into a same target global unicast IPv6 address, to obtain a first IPv6 packet corresponding to each first IPv4 packet; and each first IPv6 packet is transmitted to an IPv6 network by using the output port of each first IPv6 packet. Because IPv4 addresses carried in received IPv4 packets sent by user equipments are converted into a same target unicast IPv6 address, resource consumption during packet transmission is reduced and packet transmission efficiency is improved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a network topology principle of 464XLAT according to Embodiment 1 of the present invention;
FIG. 2 is a flowchart of a packet transmission method according to Embodiment 1 of the present invention;
FIG. 3 is a flowchart of a packet transmission method according to Embodiment 2 of the present invention;
FIG. 4 is a schematic diagram of a correspondence among an IPv4 address, a source port, and an output port according to Embodiment 2 of the present invention;
FIG. 5 is a schematic structural diagram of a first packet transmission apparatus according to Embodiment 3 of the present invention;
FIG. 6 is a schematic structural diagram of a second packet transmission apparatus according to Embodiment 3 of the present invention;
FIG. 7 is a schematic structural diagram of a third packet transmission apparatus according to Embodiment 3 of the present invention;
FIG. 8 is a schematic structural diagram of a fourth packet transmission apparatus according to Embodiment 3 of the present invention; and
FIG. 9 is a schematic diagram of an apparatus structure of a server according to Embodiment 4 of the present invention.

### DESCRIPTION OF EMBODIMENTS

To make the objectives, technical solutions, and advantages of the present invention clearer, the following further describes the embodiments of the present invention in detail with reference to the accompanying drawings.

In a scenario in which an operator provides a pure-IPv6 access service for an access gateway device due to a lack of public IPv4 address resources, a translation technology of IPv6 transition technologies generally needs to be used to translate a transmitting packet, so as to meet a requirement of a user equipment for accessing to an IPv4 site on the Internet.

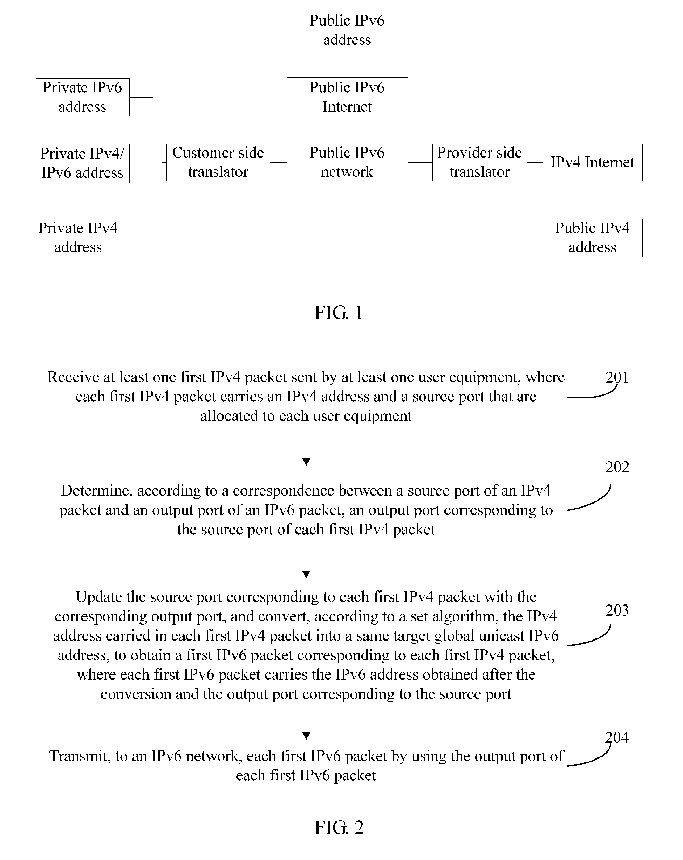

As a translation technology that is relatively widely used among the IPv6 transition technologies, 464XLAT is mainly formed by two parts: a CLAT (Customer Side Translator, customer side translator) and a PLAT (Provider Side Translator, provider side translator), and a network topology principle of 464XLAT is shown in FIG. 1.

The CLAL is deployed on an access gateway device; translates an IPv4 address header that is carried in an IPv4 packet sent by a user equipment into an IPv6 address header by using an SIIT (Stateless IP/ICMP Translation Algorithm, stateless IP/IMCP translation algorithm), so as to obtain an IPv6 packet; and sends the IPv6 packet to an IPv6 network. The PLAT is deployed on a network element node that is on a network side and has a NAT (Network Address Translation, Network Address Translation) 64 function; translates the IPv6 address header carried in the IPv6 packet into the IPv4 address header, so as to obtain the IPv4 packet; and sends the IPv4 packet to an IPv4 network and eventually to an IPv4 site, so as to implement IPv4 end-to-end communication that traverses a pure IPv6 network.

### Embodiment 1

This embodiment of the present invention provides a packet transmission method, and as shown in FIG. 2, a process of the method provided in this embodiment includes:

201: Receive at least one first IPv4 packet sent by at least one user equipment, where each first IPv4 packet carries an IPv4 address and a source port that are allocated to each user equipment.

202: Determine, according to a correspondence between a source port of an IPv4 packet and an output port of an IPv6 packet, an output port corresponding to the source port of each first IPv4 packet.

203: Update the source port corresponding to each first IPv4 packet with the corresponding output port, and convert, according to a set algorithm, the IPv4 address carried in each first IPv4 packet into a same target global unicast IPv6 address, to obtain a first IPv6 packet corresponding to each first IPv4 packet, where each first IPv6 packet carries the IPv6 address obtained after the conversion and the output port corresponding to the source port.

204: Transmit, to an IPv6 network, each first IPv6 packet by using the output port of each first IPv6 packet.

As an exemplary embodiment, before the receiving a first IPv4 packet sent by at least one user equipment, the method further includes:
starting a Dynamic Host Configuration Protocol DHCP service; and
allocating an IPv4 address to an accessed user equipment by using the DHCP service.

As an exemplary embodiment, before the converting the IPv4 address carried in each first IPv4 packet into a same target global unicast IPv6 address, the method further includes:
acquiring an IPv6 prefix of a global unicast IPv6 address from an IPv6 network server; and
padding a user-defined suffix following the acquired IPv6 prefix of the global unicast IPv6 address, to obtain the target global unicast IPv6 address.

As an exemplary embodiment, after the transmitting, to an IPv6 network, each IPv4 packet by using the output port of each IPv6 packet, the method further includes:
receiving a second IPv6 packet sent by the IPv6 network, where the second IPv6 packet carries the target global unicast IPv6 address and an output port;
determining, according to the correspondence between a source port of an IPv4 packet and an output port of an IPv6 packet, a source port corresponding to the output port of the second IPv6 packet; and updating the output port of the second IPv6 packet with the corresponding source port, and updating the IPv6 address carried in the second IPv6 packet with a corresponding IPv4 address, to obtain a second IPv4 packet corresponding to the second IPv6 packet; and
sending, by using the source port corresponding to the second IPv4 packet, the second IPv4 packet to a user equipment corresponding to the IPv4 address obtained after the update.

As an exemplary embodiment, the determining an output port corresponding to the source port of each first IPv4 packet includes:
determining, according to the correspondence between a source port of an IPv4 packet and an output port of an IPv6 packet, the output port corresponding to the source port of each first IPv4 packet; or
randomly allocating a corresponding output port according to the source port of each first IPv4 packet, to obtain the output port corresponding to the source port of each first IPv4 packet.

According to the method provided in this embodiment of the present invention, a first IPv4 packet that is sent by a user equipment and carries an IPv4 address and a source port that are allocated to each user equipment is received; an output port corresponding to the source port of each first IPv4 packet is determined; further, the source port corresponding to each first IPv4 packet is updated with the corresponding output port; the IPv4 address carried in each first IPv4 packet is converted into a same target global unicast IPv6 address, to obtain a first IPv6 packet corresponding to each first IPv4 packet; and each first IPv6 packet is transmitted to an IPv6 network by using the output port of each first IPv6 packet. Because IPv4 addresses carried in received IPv4 packets sent by user equipments are converted into a same target unicast IPv6 address, resource consumption during packet transmission is reduced and packet transmission efficiency is improved.

### Embodiment 2

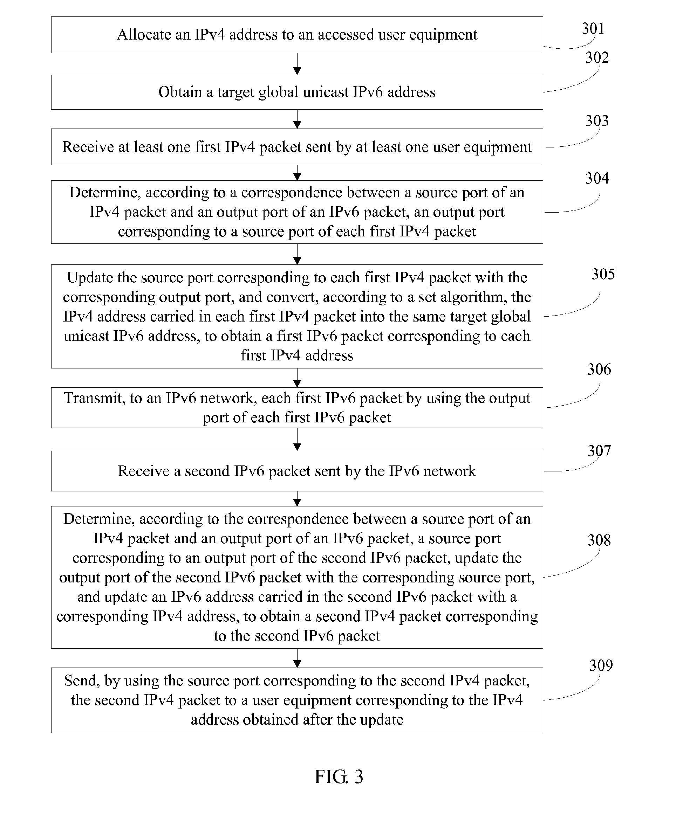

This embodiment of the present invention provides a packet transmission method, and for ease of understanding, the packet transmission method provided in this embodiment of the present invention is described in detail with reference to the content of the foregoing Embodiment 1. Referring to FIG. 3, a process of the method provided in this embodiment includes:
301: Allocate an IPv4 address to an accessed user equipment.

The user equipment is a mobile phone, a computer, or the like, and the user equipment is not specifically limited in this embodiment. Because a communication mode in an application scenario of 464XLAT is IPv4 end-to-end communication that traverses a pure IPv6 network, in order to implement, in the scenario of 464XLAT, access to an IPv4 site on the Internet by the accessed user equipment, in the method provided in this embodiment, the IPv4 address needs to be allocated to the accessed user equipment.

The IPv4 address allocated to the accessed user equipment is a private IPv4 address. Different from a public IPv4 address, the private IPv4 address belongs to a non-registered address, and cannot be used on the Internet but can be used on an internal local area network.

A manner of allocating an IPv4 address for an accessed user equipment includes but is not limited to:
starting a DHCP (Dynamic Host Configuration Protocol, Dynamic Host Configuration Protocol) service, and allocating the IPv4 address to the accessed user equipment by using the DHCP service.

DHCP is a network protocol for a local area network and involves two parts: one is a router end, and the other is a user equipment end. The router end is responsible for managing all IP network data, and responsible for processing a DHCP requirement of the user equipment end; the user equipment end is responsible for receiving IP network data allocated by the router end. In order to allocate the IPv4 address to an accessed user equipment, the router end needs to prestore an IPv4 address set, where the IPv4 address set is generally formed by consecutive IPv4 addresses. Specifically, a manner of allocating an IPv4 address to an accessed user equipment by using a DHCP service includes but is not limited to the following three manners:

### A first manner: a manual allocation manner

In the first manner, a network administrator may set fixed IPv4 addresses to some particular user equipments. Because the IPv4 addresses do not expire and can be used permanently, the IPv4 addresses are static addresses.

### A second manner: an automatic allocation manner

In the second manner, after a user equipment successfully rents an IPv4 address from the router end for the first time, the user equipment can use the address permanently.

### A third manner: a dynamic allocation manner

In the third manner, although a user equipment rents an IPv4 address from the router end for the first time, the user equipment cannot use the IPv4 address permanently, and as long as a lease expires, the user equipment has to release the occupied IPv4 address, so that another user equipment can use this IPv4 address.

302: Obtain a target global unicast IPv6 address.

Unicasting is a one-to-one communication mode between a server and a user equipment, and a switch and a router on a network forward data but do not replicate data. The global unicast IPv6 address is an IPv6 address with a start address as 001, and this type of IP address is unique globally. For example, if an email address is a global unicast IPv6 address, no matter in which country in the world, when the global unicast IPv6 address corresponding to the email address is acquired in an address bar of a browser, the email can be accessed.

A manner of obtaining a target global unicast IPv6 address includes but is not limited to the following steps:
Step 1: Acquire an IPv6 prefix of the global unicast IPv6 address from an IPv6 network server.

A manner of obtaining an IPv6 prefix of the global unicast IPv6 address from an IPv6 network server includes but is not limited to the following manner: a router configures a correct dial parameter and sends a dial request to an IPv6 network side; after receiving the dial request sent by the router, the IPv6 network side sends an IPv6 prefix of the global unicast IPv6 address to the router; and the router receives the IPv6 prefix of the global unicast IPv6 address sent by the IPv6 network side, and takes the received IPv6 prefix of the global unicast IPv6 address sent by the IPv6 network side as an acquired IPv6 prefix of the global unicast IPv6 address. The dial parameter is a network parameter, a network connection type, or the like, and content of the dial parameter is not specifically limited in this embodiment.

Further, different IPv6 network sides have different IPv6 prefixes of global unicast IPv6 addresses, and therefore, when a router is connected to different IPv6 networks, IPv6 prefixes of the global unicast IPv6 addresses acquired from IPv6 network sides by the router are also different. Specifically, if a prefix of IPv6 network a has 32 bits and a prefix of IPv6 network b has 40 bits, when a router is connected to IPv6 network a, an IPv6 prefix of the global unicast IPv6 address acquired from IPv6 network a by the router is the 32-bit IPv6 prefix; and when the router is connected to IPv6 network b, an IPv6 prefix of the global unicast IPv6 address acquired from IPv6 network b by the router is the 40-bit IPv6 prefix.

Certainly, in addition to the foregoing IPv6 network side that affects acquisition of an IPv6 prefix of the global unicast IPv6 address by a router, a manner in which the router is connected to an IPv6 network also affects the acquisition, from the IPv6 network side, of the IPv6 prefix of the global unicast IPv6 address by the router. A manner in which a router is connected to a network includes but is not limited to: being connected to the IPv6 network by using manners, such as Ethernet, LTE (Long Term Evolution, Long Term Evolution), 3GPP (3rd Generation Partnership Project, 3rd Generation Partnership Project), 3GPP2 (3rd Generation Partnership Project 2, 3rd Generation Partnership Project 2), or Wi-Fi. When the router is connected to the IPv6 network in different manners, manners of acquiring prefixes of global unicast IPv6 addresses from the IPv6 network side by the router are different. For example, when the router is connected to the IPv6 network in an LTE manner, the router acquires the IPv6 prefix of the global unicast IPv6 address in a manner of PDN (Packet Data Network, packet data network) activation; and when the router is connected to the IPv6 network in an Ethernet manner, the router acquires the IPv6 prefix of the global unicast IPv6 address in a manner, such as SLAAC (Stateless Address Auto Configuration, stateless address auto Configuration) or DHCPv6.

Step 2: Pad a user-defined suffix following the acquired IPv6 prefix of the global unicast IPv6 address, to obtain the target global unicast IPv6 address.

For step 2, a legal quantity of bits of a global unicast IPv6 address is 128; therefore, in order to obtain a legal global unicast IPv6 address, after the IPv6 prefix of the global unicast IPv6 address is acquired, the user-defined suffix following the acquired IPv6 prefix of the global unicast IPv6 address is padded, so as to obtain the target global unicast IPv6 address. Specifically, when the user-defined suffix following the acquired IPv6 prefix of the global unicast IPv6 address is padded, the following steps may be used:

First, a quantity of bits of the user-defined suffix that needs to be padded is determined according to a quantity of bits of the acquired IPv6 prefix of the global unicast IPv6 address. For ease of understanding, Table 1 is used as an example in the following for description.

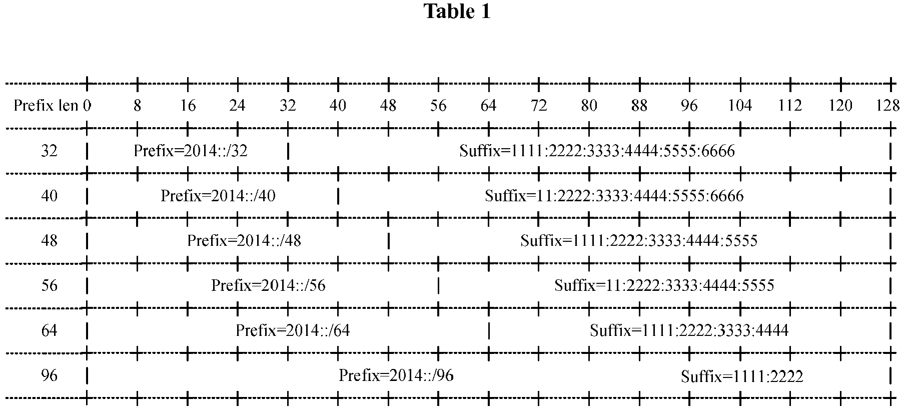

In Table 1, Prefix represents the IPv6 prefix of the global unicast IPv6 address acquired from the network side, and Suffix represents the padded suffix, where the suffix is padded in a hexadecimal manner. It can be seen from Table 1 that, if the IPv6 prefix of the global unicast IPv6 address acquired from the IPv6 network side is Prefix=2014::/32, that is, a length of the IPv6 prefix of the global unicast IPv6 address acquired from the IPv6 network side is 32 bits, a 96-bit suffix following the acquired 32-bit IPv6 prefix of the global unicast IPv6 address needs to be padded, that is, the padded suffix is Suffix=1111:2222:3333:4444:5555:6666, thereby ensuring that an obtained IPv6 address of a global unicast IPv6 address is a legal IPv6 address; if the IPv6 prefix of the global unicast IPv6 address acquired from the IPv6 network side is Prefix=2014::/56, that is, a length of the IPv6 prefix of the global unicast IPv6 address acquired from the IPv6 network side is 56 bits, a 72-bit suffix following the acquired 56-bit IPv6 prefix of the global unicast IPv6 address needs to be padded, that is, the padded suffix is Suffix=11:2222:3333:4444:5555, thereby ensuring that an obtained global unicast IPv6 address is a legal IPv6 address.

Second, content of the user-defined suffix is determined. A manner of determining content of a user-defined suffix includes but is not limited to: performing determining according to a current network environment. During specific implementation, the content of the suffix following the acquired IPv6 prefix of the global unicast IPv6 address may be randomly filled in; any suffix is acceptable as long as it ensures that the obtained global unicast IPv6 address meets a networking requirement of a current network.

It should be noted that steps 301 and 302 are not executed every time a packet is transmitted; the foregoing steps 301 and 302 may be executed when a packet is transmitted for the first time, and when another packet is transmitted, the IPv4 address allocated to the accessed user equipment in the foregoing step 301 and the global unicast IPv6 address obtained in 302 may be directly used. Certainly, if the foregoing IPv4 address allocated to the accessed user equipment and the obtained global unicast IPv6 address are updated, the foregoing steps 301 and 302 can be executed again, and a quantity of times steps 301 and 302 are executed is not limited in this embodiment.

303: Receive at least one first IPv4 packet sent by at least one user equipment.

At a moment, a user equipment needs to access an IPv4 site on the Internet due to a service requirement, in this case, the user equipment sends a first IPv4 packet to a router, so that the router may send, by means of subsequent steps and after receiving the first IPv4 packet sent by the user equipment, the IPv4 packet sent by the user equipment to the IPv4 site that is on the Internet and needs to be accessed.

Information carried in the first IPv4 packet includes but is not limited to a data length, a used protocol, a destination IP address, an IPv4 address and a source port that are allocated to each user equipment, and the like, and the information carried in the first IPv4 packet is not specifically limited in this embodiment.

It should be noted that information carried in first IPv4 packets sent by each user equipment is different, and a difference in the information carried in the first IPv4 packets leads to a difference in source ports that are applicable in a transmission process; therefore, the source ports carried in the first IPv4 packets sent by user equipments are different.

304: Determine, according to a correspondence between a source port of an IPv4 packet and an output port of an IPv6 packet, an output port corresponding to a source port of each first IPv4 packet.

In order to avoid an address mapping error in a return packet, in the method provided in this embodiment, after the at least one first IPv4 packet sent by the at least one user equipment is received, the output port corresponding to the source port of each first IPv4 packet needs to be determined.

Specifically, a manner of determining an output port corresponding to a source port of each first IPv4 packet includes but is not limited to the following two manners:

A first manner: Determine, according to a correspondence between a source port of an IPv4 packet and an output port of an IPv6 packet, an output port corresponding to a source port of each first IPv4 packet.

For the first manner, after the first IPv4 packet that carries a source port and sent by the at least one user equipment is received, the output port corresponding to the source port of each first IPv4 packet may be determined according to the preset correspondence between a source port of an IPv4 packet and an output port of an IPv6 packet.

A second manner: Randomly allocate a corresponding output port according to a source port of each first IPv4 packet, to obtain an output port corresponding to the source port of each first IPv4 packet.

For the second manner, after the first IPv4 packet that carries a source port and sent by the at least one user equipment is received, the output port may be randomly allocated to the source port of each first IPv4 packet according to a usage condition of an output port, and further, the output port randomly allocated to the source port of each first IPv4 packet is used as the output port corresponding to the source port of each first IPv4 packet. Specifically, by using an example in which there are ten output ports and there are five received first IPv4 packets carrying source ports, if the current output ports are not in use, five output ports may be randomly selected from the ten output ports and be allocated to the five received first IPv4 packets, and further, each output port allocated to each first IPv4 packet is used as the output port corresponding to the source port of each first IPv4 packet; and if two of the current output ports are used, five output ports may be randomly selected from the remaining eight output ports and be allocated to the five received first IPv4 packets, and further, each output port allocated to each first IPv4 packet is used as the output port corresponding to the source port of each first IPv4 packet.

Further, because a source port of each first IPv4 packet is corresponding to one output port, and each first IPv4 packet carries an IPv4 address, by using the foregoing process of determining an output port corresponding to a source port of each first IPv4 packet, a correspondence between a source port and an output port that are of each first IPv4 packet may be obtained. Because the correspondence between a source port and an output port that are of each first IPv4 packet may continue to be used in a following packet transmission process, in the method provided in this embodiment, after the output port corresponding to the source port of each first IPv4 packet is determined, a step of storing a correspondence among an IPv4 address, a source port, and an output port that are of each first IPv4 packet is further executed. Specifically, a manner of storing a correspondence among an IPv4 address, a source port, and an output port that are of each first IPv4 packet includes but is not limited to: storing the correspondence among an IPv4 address, a source port, and an output port that are of each first IPv4 packet in a corresponding storage medium such as a memory or a flash memory.

Preferably, for ease of transmitting, in the following steps, a packet according to the obtained correspondence among an IPv4 address, a source port, and an output port that are of each IPv4 packet, when a corresponding output port is determined for a source port of each IPv4 packet, different port numbers may be set for a source port and an output port of each IPv4 packet.

For the foregoing process, for ease of understanding, the following describes in detail by using a specific example.

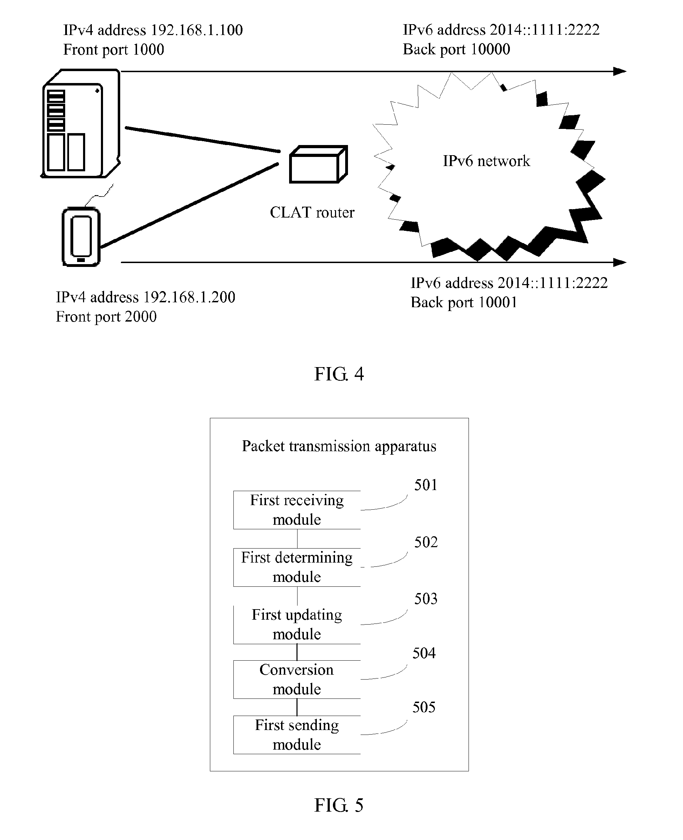

FIG. 4 is a schematic diagram of a correspondence among an IPv4 address, a source port, and an output port, and user equipments sending first IPv4 packets are a mobile phone and a desktop computer. If a first IPv4 packet sent by the mobile phone is first IPv4 packet 1, an IPv4 address carried in first IPv4 packet 1 is 192.168.1.200, a first IPv4 packet sent by the desktop computer is first IPv4 packet 2, and an IPv4 address carried in first IPv4 packet 2 is 192.168.1.100, when port numbers are set for source ports and output ports that are corresponding to the IPv4 addresses, a port number 2000 may be set for the source port corresponding to the IPv4 address 192.168.1.200 of the mobile phone, and a port number 10001 may be set for the corresponding output port; and a port number 1000 may be set for the source port corresponding to the IPv4 address 192.168.100 of the desktop computer, and a port number 10000 may be set for the corresponding output port.

Further, according to the correspondence among an IPv4 address, a source port, and an output port that are of each IPv4 packet, in an entire packet transmission process, not only may a corresponding output port be determined according to a source port of each first IPv4 packet, but also a source port of each first IPv4 packet may be determined according to an output port, so as to determine a corresponding IPv4 address.

For ease of understanding, the following gives descriptions still by using the example of the foregoing set correspondence among an IPv4 address, a corresponding source port number, and a corresponding output port number that are of the mobile phone.

If that the IPv4 address of the mobile phone is 192.168.1.200 is known, according to each obtained correspondence among an IPv4 address, a source port number, and an output port number, it may be determined that the source port number corresponding to the IPv4 address 192.168.1.200 of the mobile phone is 2000, and the corresponding output port number is 10001; if that the output port number is 10001 is known, according to the correspondence among an IPv4 address, a source port number, and an output port number that are of the mobile phone, it may be determined that the source port number corresponding to the output port number 10001 is 2000, and the corresponding IPv4 address is 192.168.1.200.

305: Update the source port corresponding to each first IPv4 packet with the corresponding output port, and convert, according to a set algorithm, the IPv4 address carried in each first IPv4 packet into the same target global unicast IPv6 address, to obtain a first IPv6 packet corresponding to each first IPv4 address.

Because in the foregoing step 304, the output port corresponding to the source port of each first IPv4 packet is determined, in this step, based on the foregoing step 304, the source port corresponding to each first IPv4 packet is updated with the corresponding output port.

Further, in order to implement that the received first IPv4 packet of each user equipment is sent, across an IPv6 network, to the IPv4 site on the Internet, and that a resource consumed when the IPv4 address carried in the received first IPv4 packet of each user equipment is converted into an IPv6 address is reduced, in an application scenario in this embodiment, the IPv4 address carried in each received first IPv4 packet is converted into the same target global unicast IPv6 address according to the set algorithm, so as to obtain the first IPv6 packet corresponding to each first IPv4 packet. A manner of setting an algorithm is not specifically limited in this embodiment, and any algorithm is acceptable as long as it can implement that during specific implementation, the IPv4 address carried in each first IPv4 packet is converted into the same target global unicast IPv6 address. Information carried in each first IPv6 packet includes but is not limited to an IPv6 address obtained after the conversion, an output port corresponding to a source port of a first IPv4 packet corresponding to a first IPv6 packet, and the like.

For the foregoing process, for ease of understanding, the following describes in detail by using a specific example.

For example, the target global unicast IPv6 address is 2014::1111:2222, and if there are two received first IPv4 packets, that is, first IPv4 packet 1 and first IPv4 packet 2 separately, where an IPv4 address carried in first IPv4 packet 1 is 192.168.1.100, and an IPv4 address carried in first IPv4 packet 2 is 192.168.1.200, received first IPv4 packet 1 and first IPv4 packet 2 may be converted into the same global unicast IPv6 address 2014::1111:2222.

306: Transmit, to an IPv6 network, each first IPv6 packet by using the output port of each first IPv6 packet.

In the foregoing step 305, each first IPv4 packet is converted into an IPv6 packet, and each first IPv6 packet carries an output port; therefore, in order to implement IPv4 end-to-end communication that traverses a pure IPv6 network, in this step, each first IPv6 packet is transmitted to the IPv6 network by using the output port of each first IPv6 packet.

Further, by using the foregoing packet transmission process, the first IPv4 packet sent by each user equipment is translated into the corresponding first IPv6 packet, and transmission is performed by using the IPv6 network, thereby implementing a process of sending an IPv4 packet, and for a specific process of receiving an IPv4 packet, reference may be made to the subsequent steps.

307: Receive a second IPv6 packet sent by the IPv6 network.

In order to implement IPv4 end-to-end communication that traverses a pure IPv6 network, after receiving each first IPv6 packet, the IPv6 network sends each received first IPv6 packet to a network node; and after translation on a network side, each first IPv6 packet is translated into a corresponding IPv4 packet, and then the IPv4 packet is sent to the IPv4 site on the Internet. After receiving the corresponding IPv4 packet that is translated from each first IPv6 packet, the IPv4 site on the Internet generates a return IPv4 packet according to the corresponding IPv4 packet that is translated from each received first IPv6 packet, where the return IPv4 packet is transmitted to the foregoing network node by using an IPv4 network on the Internet, and then is translated on the network side to generate the corresponding second IPv6 packet. Information carried in the second IPv6 packet includes but is not limited to a target global unicast IPv6 address and an output port. The second IPv6 packet is sent, by using the IPv6 network, to an output port that sends the corresponding first IPv6 packet.

Further, after the second IPv6 packet is generated, the IPv6 network sends the generated second IPv6 packet to a location indicated by the address carried in the second IPv6 packet. Although addresses carried in all the second IPv6 packets are the same and are the target global unicast IPv6 address, the second IPv4 packets are received at different output ports because output ports carried in all the second IPv6 packets are different.

308: Determine, according to the correspondence between a source port of an IPv4 packet and an output port of an IPv6 packet, a source port corresponding to an output port of the second IPv6 packet; and update the output port of the second IPv6 packet with the corresponding source port, and update an IPv6 address carried in the second IPv6 packet with a corresponding IPv4 address, to obtain a second IPv4 packet corresponding to the second IPv6 packet.

Because the correspondence among an IPv4 address, a source port, and an output port is prestored, after the output port receives the second IPv6 packet sent by the IPv6 network, the corresponding source port is determined according to the prestored correspondence between a source port of an IPv4 packet and an output port; and further, the output port of the second IPv6 packet is updated with the corresponding source port, and the IPv6 address carried in the second IPv6 packet is updated with the corresponding IPv4 address, so as to obtain the second IPv4 packet corresponding to the second IPv6 packet. Information carried in the second IPv4 packet includes but is not limited to the IPv4 address obtained after the conversion, and the like.

309: Send, by using the source port corresponding to the second IPv4 packet, the second IPv4 packet to a user equipment corresponding to the IPv4 address obtained after the update.

According to the prestored correspondence among an IPv4 address, a source port, and an output port, after the IPv6 address carried in the second IPv6 packet is updated with the corresponding IPv4 address to obtain the second IPv4 packet corresponding to the second IPv6 packet, the second IPv4 packet may be sent, by using the source port corresponding to the second IPv4 packet, to the user equipment corresponding to the IPv4 address obtained after the update, thereby implementing IPv4 end-to-end communication that traverses a pure IPv6 network.

It should be noted that because upgrade applications that carried by a router itself are developed based on a public IPv4, and in an existing scenario of 464XLAT, the router cannot be connected to the public IPv4, these applications on the router cannot be upgraded, which causes that these applications cannot work normally on the router, thereby affecting packet transmission. In order to resolve an upgrade problem of an application that carried by a router itself, in the method provided in this embodiment, a virtual IPv4 public address is further set for the router. The virtual IPv4 address may be converted into the target global unicast IPv6 address, and may access the IPv4 site on the Internet by means of the foregoing packet transmission process, so as to enable the application on the router to be upgraded normally. A method for setting a virtual IPv4 public address is not specifically limited in this embodiment, and any address is acceptable as long as it ensures, during specific implementation, that the generated virtual IPv4 public address is a legal address.

According to the method provided in this embodiment of the present invention, a first IPv4 packet that is sent by a user equipment and carries an IPv4 address and a source port that are allocated to each user equipment is received; an output port corresponding to the source port of each first IPv4 packet is determined; further, the source port corresponding to each first IPv4 packet is updated with the corresponding output port; the IPv4 address carried in each first IPv4 packet is converted into a same target global unicast IPv6 address, to obtain a first IPv6 packet corresponding to each first IPv4 packet; and each first IPv6 packet is transmitted to an IPv6 network by using the output port of each first IPv6 packet. Because IPv4 addresses carried in received IPv4 packets sent by user equipments are converted into a same target unicast IPv6 address, resource consumption during packet transmission is reduced and packet transmission efficiency is improved.

### Embodiment 3

Referring to FIG. 5, this embodiment of the present invention provides a packet transmission apparatus, where the apparatus includes:
a first receiving module 501, configured to control a receiver to receive at least one first IPv4 packet sent by at least one user equipment, where each first IPv4 packet carries an IPv4 address and a source port that are allocated to each user equipment;
a first determining module 502, configured to control a processor to determine, according to a correspondence between a source port of an IPv4 packet and an output port of an IPv6 packet, an output port corresponding to the source port of each first IPv4 packet;
a first updating module 503, configured to control the processor to update the source port corresponding to each first IPv4 packet with the corresponding output port;
a conversion module 504, configured to control the processor to convert, according to a set algorithm, the IPv4 address carried in each first IPv4 packet into a same target global unicast IPv6 address, to obtain a first IPv6 packet corresponding to each first IPv4 packet, where each first IPv6 packet carries the IPv6 address obtained after the conversion and the output port corresponding to the source port; and
a first sending module 505, configured to control a transmitter to transmit, to an IPv6 network, each first IPv6 packet by using the output port corresponding to each first IPv6 packet.

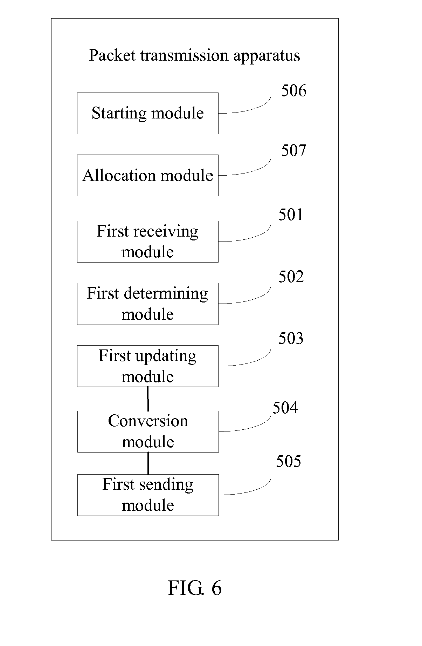

Referring to FIG. 6, the apparatus further includes:
a starting module 506, configured to control the processor to start a Dynamic Host Configuration Protocol DHCP service; and
an allocation module 507, configured to control the processor to allocate an IPv4 address to an accessed user equipment by using the DHCP service.

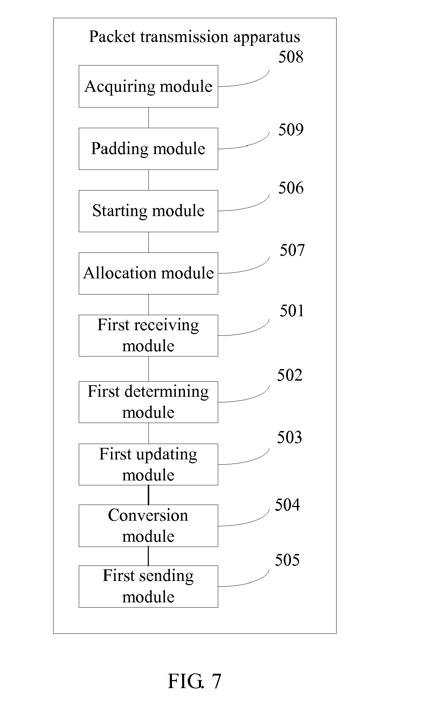

Referring to FIG. 7, the apparatus further includes:
an acquiring module 508, configured to control the processor to acquire an IPv6 prefix of the global unicast IPv6 address from an IPv6 network server; and
a padding module 509, configured to control the processor to pad a user-defined suffix following the acquired IPv6 prefix of the global unicast IPv6 address, to obtain the target global unicast IPv6 address.

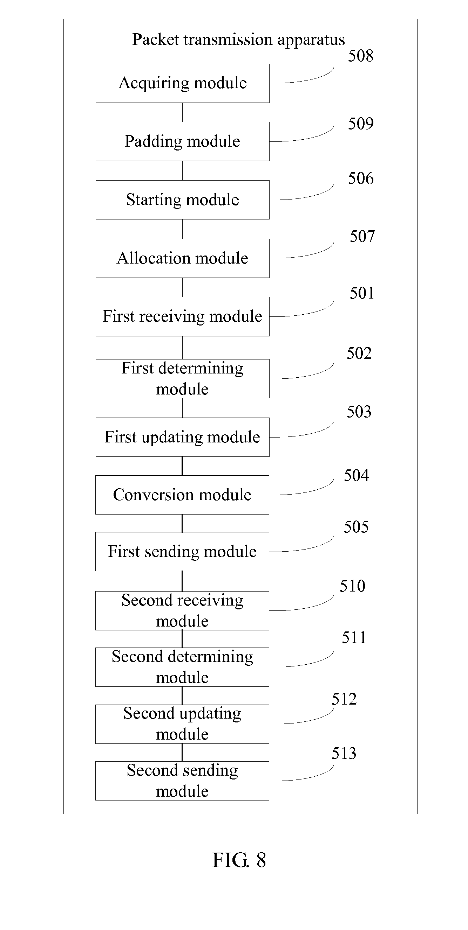

Referring to FIG. 8, the apparatus further includes:
a second receiving module 510, configured to control the receiver to receive a second IPv6 packet sent by the IPv6 network, where the second IPv6 packet carries the target global unicast IPv6 address and an output port;
a second determining module 511, configured to control the processor to determine, according to the correspondence between a source port of an IPv4 packet and an output port of an IPv6 packet, a source port corresponding to the output port of the second IPv6 packet;
a second updating module 512, configured to control the processor to update the output port of the second IPv6 packet with the corresponding source port, and update the IPv6 address carried in the second IPv6 packet with a corresponding IPv4 address, to obtain a second IPv4 packet corresponding to the second IPv6 packet; and
a second sending module 513, configured to control the transmitter to send, by using the source port of the second IPv4 packet, the second IPv4 packet to a user equipment corresponding to the IPv4 address obtained after the update.

As an exemplary embodiment, the first determining module 502 is configured to control the processor to determine, according to the correspondence between a source port of an IPv4 packet and an output port of an IPv6 packet, the output port corresponding to the source port of each first IPv4 packet; or randomly allocate a corresponding output port according to the source port of each first IPv4 packet, to obtain the output port corresponding to the source port of each first IPv4 packet.

In conclusion, according to the apparatus provided in this embodiment of the present invention, a first IPv4 packet that is sent by a user equipment and carries an IPv4 address and a source port that are allocated to each user equipment is received; an output port corresponding to the source port of each first IPv4 packet is determined; further, the source port corresponding to each first IPv4 packet is updated with the corresponding output port; the IPv4 address carried in each first IPv4 packet is converted into a same target global unicast IPv6 address, to obtain a first IPv6 packet corresponding to each first IPv4 packet; and each first IPv6 packet is transmitted to an IPv6 network by using the output port of each first IPv6 packet. Because IPv4 addresses carried in received IPv4 packets sent by user equipments are converted into a same target unicast IPv6 address, resource consumption during packet transmission is reduced and packet transmission efficiency is improved.

### Embodiment 4

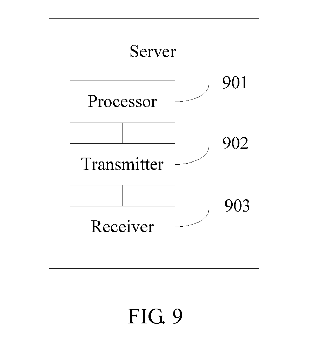

FIG. 9 is a schematic structural diagram of a server in one implementation manner, where the server includes: a processor 1001, a transmitter 902, and a receiver 903,the receiver 903 is configured to receive at least one first IPv4 packet sent by at least one user equipment, where each first IPv4 packet carries an IPv4 address and a source port that are allocated to each user equipment;
the processor 901 is configured to: determine, according to a correspondence between a source port of an IPv4 packet and an output port of an IPv6 packet, an output port corresponding to the source port of each first IPv4 packet; update the source port corresponding to each first IPv4 packet with the corresponding output port; and convert, according to a set algorithm, the IPv4 address carried in each first IPv4 packet into a same target global unicast IPv6 address, to obtain a first IPv6 packet corresponding to each first IPv4 packet, where each first IPv6 packet carries the IPv6 address obtained after the conversion and the output port corresponding to the source port; and
the transmitter 902 is configured to transmit, to an IPv6 network, each first IPv6 packet by using the output port corresponding to each first IPv6 packet.

As an exemplary embodiment, the processor 901 is further configured to: start a Dynamic Host Configuration Protocol DHCP service; and allocate an IPv4 address to an accessed user equipment by using the DHCP service.

As an exemplary embodiment, the processor 901 is further configured to: acquire an IPv6 prefix of the global unicast IPv6 address from an IPv6 network server; and pad a user-defined suffix following the acquired IPv6 prefix of the global unicast IPv6 address, to obtain the target global unicast IPv6 address.

As an exemplary embodiment, the receiver 903 is further configured to receive a second IPv6 packet sent by the IPv6 network, where the second IPv6 packet carries the target global unicast IPv6 address;
the transmitter 902 is further configured to send, by using the source port corresponding to the second IPv4 packet, the second IPv4 packet to a user equipment corresponding to the IPv4 address obtained after the update; and
the processor 901 is further configured to: determine, according to the correspondence between a source port of an IPv4 packet and an output port of an IPv6 packet, a source port corresponding to an output port of the second IPv6 packet; and update the output port of the second IPv6 packet with the corresponding source port, and update the IPv6 address carried in the second IPv6 packet with a corresponding IPv4 address, to obtain a second IPv4 packet corresponding to the second IPv6 packet.

As an exemplary embodiment, the processor 901 is configured to: determine, according to the correspondence between a source port of an IPv4 packet and an output port of an IPv6 packet, the output port corresponding to the source port of each first IPv4 packet; or randomly allocate a corresponding output port according to the source port of each first IPv4 packet, to obtain the output port corresponding to the source port of each first IPv4 packet.

According to the server provided in this embodiment of the present invention, a first IPv4 packet that is sent by a user equipment and carries an IPv4 address and a source port that are allocated to each user equipment is received; an output port corresponding to the source port of each first IPv4 packet is determined; further, the source port corresponding to each first IPv4 packet is updated with the corresponding output port; the IPv4 address carried in each first IPv4 packet is converted into a same target global unicast IPv6 address, to obtain a first IPv6 packet corresponding to each first IPv4 packet; and each first IPv6 packet is transmitted to an IPv6 network by using the output port of each first IPv6 packet. Because IPv4 addresses carried in received IPv4 packets sent by user equipments are converted into a same target unicast IPv6 address, resource consumption during packet transmission is reduced and packet transmission efficiency is improved.

It should be noted that during data transmission by a network side device and a terminal provided in the foregoing embodiments, description is given only using division of the foregoing functional modules. In practice, the functions may be allocated to different functional modules for implementation as required. That is, internal structures of the network side device and the terminal are divided into different functional modules to implement all or part of the functions described above. In addition, the network side device, the terminal, and the data transmission system provided in the foregoing embodiments are based on the same inventive concept as the data transmission methods in the embodiments. For specific implementation processes of the foregoing embodiment, reference may be made to the method embodiments, and details are not described herein again.

The sequence numbers of the preceding embodiments of the present invention are only for ease of description, but do not denote the preference of the embodiments.

A person of ordinary skill in the art may understand that all or a part of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A packet transmission method, wherein the method comprises:
receiving at least one first IPv4 packet sent by at least one user equipment, wherein each of the first IPv4 packet carries an IPv4 address and a source port that are allocated to a user equipment;
determining, according to a correspondence between a source port of an IPv4 packet and an output port of an IPv6 packet, an output port corresponding to the source port of each of the first IPv4 packet;
updating the source port corresponding to each of the first IPv4 packet with the corresponding output port;
converting, according to a set algorithm, the IPv4 address carried in each of the first IPv4 packet into a same target global unicast IPv6 address, to obtain a first IPv6 packet corresponding to each of the first IPv4 packet, wherein each of the first IPv6 packet carries the IPv6 address obtained after the conversion and the output port corresponding to the source port; and
transmitting, to an IPv6 network, each of the first IPv6 packet by using the output port of each of the first IPv6 packet.

2. The method according to claim 1, before the receiving a first IPv4 packet sent by at least one user equipment, further comprising:
starting a Dynamic Host Configuration Protocol DHCP service; and
allocating an IPv4 address to an accessed user equipment by using the DHCP service.

3. The method according to claim 1, before the converting the IPv4 address carried in each of the first IPv4 packet into a same target global unicast IPv6 address, further comprising:
acquiring an IPv6 prefix of the global unicast IPv6 address from an IPv6 network server; and
padding a user-defined suffix following the acquired IPv6 prefix of the global unicast IPv6 address, to obtain the target global unicast IPv6 address.

4. The method according to claim 1, after the transmitting, to an IPv6 network, each of the first IPv6 packet by using the output port of each of the first IPv6 packet, further comprising:
receiving a second IPv6 packet sent by the IPv6 network, wherein the second IPv6 packet carries the target global unicast IPv6 address and an output port;
determining, according to the correspondence between a source port of an IPv4 packet and an output port of an IPv6 packet, a source port corresponding to the output port of the second IPv6 packet; and updating the output port of the second IPv6 packet with the corresponding source port, and updating the IPv6 address carried in the second IPv6 packet with a corresponding IPv4 address, to obtain a second IPv4 packet corresponding to the second IPv6 packet; and
sending, by using the source port of the second IPv4 packet, the second IPv4 packet to a user equipment corresponding to the IPv4 address obtained after the update.

5. The method according to claim 1, wherein the determining an output port corresponding to the source port of each of the first IPv4 packet comprises:
determining, according to the correspondence between a source port of an IPv4 packet and an output port of an IPv6 packet, the output port corresponding to the source port of each of the first IPv4 packet; or
randomly allocating a corresponding output port according to the source port of each of the first IPv4 packet, to obtain the output port corresponding to the source port of each of the first IPv4 packet.

6. A packet transmission apparatus, wherein the apparatus comprises:
a first receiving module, configured to control a receiver to receive at least one first IPv4 packet sent by at least one user equipment, wherein each of the first IPv4 packet carries an IPv4 address and a source port that are allocated to each user equipment;
a first determining module, configured to control a processor to determine, according to a correspondence between a source port of an IPv4 packet and an output port of an IPv6 packet, an output port corresponding to the source port of each of the first IPv4 packet;
a first updating module, configured to control the processor to update the source port corresponding to each of the first IPv4 packet with the corresponding output port;
a conversion module, configured to control the processor to convert, according to a set algorithm, the IPv4 address carried in each of the first IPv4 packet into a same target global unicast IPv6 address, to obtain a first IPv6 packet corresponding to each of the first IPv4 packet, wherein each of the first IPv6 packet carries the IPv6 address obtained after the conversion and the output port corresponding to the source port; and
a first sending module, configured to control a transmitter to transmit, to an IPv6 network, each of the first IPv6 packet by using the output port corresponding to each of the first IPv6 packet.

7. The apparatus according to claim 6, wherein the apparatus further comprises:
a starting module, configured to control the processor to start a Dynamic Host Configuration Protocol DHCP service; and
an allocation module, configured to control the processor to allocate an IPv4 address to an accessed user equipment by using the DHCP service.

8. The apparatus according to claim 6, wherein the apparatus further comprises:
an acquiring module, configured to control the processor to acquire an IPv6 prefix of the global unicast IPv6 address from an IPv6 network server; and
a padding module, configured to control the processor to pad a user-defined suffix following the acquired IPv6 prefix of the global unicast IPv6 address, to obtain the target global unicast IPv6 address.

9. The apparatus according to claim 6, wherein the apparatus further comprises:
a second receiving module, configured to control the receiver to receive a second IPv6 packet sent by the IPv6 network, wherein the second IPv6 packet carries the target global unicast IPv6 address and an output port;
a second determining module, configured to control the processor to determine, according to the correspondence between a source port of an IPv4 packet and an output port of an IPv6 packet, a source port corresponding to the output port of the second IPv6 packet;
a second updating module, configured to control the processor to update the output port of the second IPv6 packet with the corresponding source port, and update the IPv6 address carried in the second IPv6 packet with a corresponding IPv4 address, to obtain a second IPv4 packet corresponding to the second IPv6 packet; and
a second sending module, configured to control the transmitter to send, by using the source port of the second IPv4 packet, the second IPv4 packet to a user equipment corresponding to the IPv4 address obtained after the update.

10. The apparatus according to claim 9, wherein the first determining module is configured to control the processor to determine, according to the correspondence between a source port of an IPv4 packet and an output port of an IPv6 packet, the output port corresponding to the source port of each of the first IPv4 packet; or randomly allocate a corresponding output port according to the source port of each of the first IPv4 packet, to obtain the output port corresponding to the source port of each of the first IPv4 packet.

11. A server, wherein the server comprises: a processor, a transmitter, and a receiver, wherein:
the receiver is configured to receive at least one first IPv4 packet sent by at least one user equipment, wherein each of the first IPv4 packet carries an IPv4 address and a source port that are allocated to each user equipment;
the processor is configured to: determine, according to a correspondence between a source port of an IPv4 packet and an output port of an IPv6 packet, an output port corresponding to the source port of each of the first IPv4 packet; update the source port corresponding to each of the first IPv4 packet with the corresponding output port; and convert, according to a set algorithm, the IPv4 address carried in each of the first IPv4 packet into a same target global unicast IPv6 address, to obtain a first IPv6 packet corresponding to each of the first IPv4 packet, wherein each of the first IPv6 packet carries the IPv6 address obtained after the conversion and the output port corresponding to the source port; and
the transmitter is configured to transmit, to an IPv6 network, each of the first IPv6 packet by using the output port of each of the first IPv6 packet.

12. The server according to claim 11, wherein the processor is further configured to: start a Dynamic Host Configuration Protocol DHCP service; and allocate an IPv4 address to an accessed user equipment by using the DHCP service.

13. The server according to claim 11, wherein the processor is further configured to: acquire an IPv6 prefix of the global unicast IPv6 address from an IPv6 network server; and pad a user-defined suffix following the acquired IPv6 prefix of the global unicast IPv6 address, to obtain the target global unicast IPv6 address.

14. The server according to claim 11, wherein the receiver is further configured to receive a second IPv6 packet sent by the IPv6 network, wherein the second IPv6 packet carries the target global unicast IPv6 address and an output port;
the transmitter is further configured to send, by using the source port of the second IPv4 packet, the second IPv4 packet to a user equipment corresponding to the IPv4 address obtained after the update; and
the processor is further configured to: determine, according to the correspondence between a source port of an IPv4 packet and an output port of an IPv6 packet, a source port corresponding to the output port of the second IPv6 packet; and update the output port of the second IPv6 packet with the corresponding source port, and update the IPv6 address carried in the second IPv6 packet with a corresponding IPv4 address, to obtain a second IPv4 packet corresponding to the second IPv6 packet.

15. The server according to claim 11, wherein the processor is configured to: determine, according to the correspondence between a source port of an IPv4 packet and an output port of an IPv6 packet, the output port corresponding to the source port of each of the first IPv4 packet; or randomly allocate a corresponding output port according to the source port of each of the first IPv4 packet, to obtain output corresponding to the source port of each of the first IPv4 packet.
